(19) Europäisches Patentamt
European Patent Office
Office européen des brevets

(11) **EP 2 663 394 B1**

(12) **FASCICULE DE BREVET EUROPEEN**

(45) Date de publication et mention de la délivrance du brevet:
**05.02.2020 Bulletin 2020/06**

(51) Int Cl.:
***B01J 3/04*** *(2006.01)*

(21) Numéro de dépôt: **11817348.3**

(22) Date de dépôt: **15.12.2011**

(86) Numéro de dépôt international:
**PCT/FR2011/053001**

(87) Numéro de publication internationale:
**WO 2012/085399 (28.06.2012 Gazette 2012/26)**

(54) **PROCEDE DE SYNTHESE DE PARTICULES DISSYMETRIQUES (PARTICULES DE JANUS) PAR ELECTROCHIMIE BIPOLAIRE**

VERFAHREN ZUR SYNTHESE VON ASYMMETRISCHEN TEILCHEN (JANUS-TEILCHEN) MITTELS BIPOLARER ELEKTROCHEMIE

METHOD FOR SYNTHESIZING DISSYMMETRIC PARTICLES (JANUS PARTICLES) BY MEANS OF BIPOLAR ELECTROCHEMISTRY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1061031**

(43) Date de publication de la demande:
**20.11.2013 Bulletin 2013/47**

(73) Titulaires:
- **Université Bordeaux 1**
  **33405 Talence Cedex (FR)**
- **Institut Polytechnique De Bordeaux (IPB)**
  **33400 Talence (FR)**
- **Centre National de la Recherche Scientifique (C.N.R.S.)**
  **75016 Paris (FR)**

(72) Inventeurs:
- **KUHN, Alexander**
  **F-33420 Guillac (FR)**
- **LOGET, Gabriel Michel Pierre**
  **92612 Irvine**
  **CA (US)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
- **JEAN-CLAUDE BRADLEY ET AL: "Contactless Electrodeposition of Palladium Catalysts", ANGEWANDTE CHEMIE INTERNATIONAL EDITION, vol. 38, no. 11, 1 juin 1999 (1999-06-01), pages 1663-1666, XP055005342, ISSN: 1433-7851, DOI: 10.1002/(SICI)1521-3773(19990601)38:11<166 3::AID-ANIE1663>3.0.CO;2-C cité dans la demande**
- **ADELINE PERRO ET AL: "Design and synthesis of Janus micro- and nanoparticles", JOURNAL OF MATERIALS CHEMISTRY, THE ROYAL SOCIETY OF CHEMISTRY, CAMBRIDGE, GB, vol. 15, 25 juin 2005 (2005-06-25), pages 3745-3760, XP002489700, ISSN: 0959-9428, DOI: 10.1039/B505099E [extrait le 2005-07-25] cité dans la demande**
- **JUAN G. DUQUE ET AL: "Self-Assembled Nanoparticle-Nanotube Structures (nanoPaNTs) Based on Antenna Chemistry of Single-Walled Carbon Nanotubes", JOURNAL OF PHYSICAL CHEMISTRY C, vol. 113, no. 43, 29 octobre 2009 (2009-10-29), pages 18863-18869, XP055005349, ISSN: 1932-7447, DOI: 10.1021/jp906038k cité dans la demande**
- **JEAN-CLAUDE BRADLEY ET AL: "Creating electrical contacts between metal particles using directed electrochemical growth", NATURE, vol. 389, no. 6648, 18 septembre 1997 (1997-09-18), pages 268-271, XP055005350, ISSN: 0028-0836, DOI: 10.1038/38464 cité dans la demande**

EP 2 663 394 B1

• CHOMPUNUCH WARAKULWIT ET AL: "Dissymmetric Carbon Nanotubes by Bipolar Electrochemistry", NANO LETTERS, vol. 8, no. 2, 1 février 2008 (2008-02-01) , pages 500-504, XP055005352, ISSN: 1530-6984, DOI: 10.1021/nl072652s cité dans la demande
• LOGET G ET AL: "Single point electrodeposition of nickel for the dissymmetric decoration of carbon tubes", ELECTROCHIMICA ACTA, ELSEVIER SCIENCE PUBLISHERS, BARKING, GB, vol. 55, no. 27, 30 novembre 2010 (2010-11-30), pages 8116-8120, XP027428432, ISSN: 0013-4686, DOI: 10.1016/J.ELECTACTA.2010.01.070 [extrait le 2010-01-25] cité dans la demande

**Description**

La présente invention concerne un procédé de synthèse de particules dissymétriques, aussi appelé particules de Janus, de taille submicronique ou micronique par électrochimie bipolaire.

Dans la description ci-dessous, les références en exposant renvoient à la liste des références présentée après les exemples.

Dans la mythologie romaine, Janus est un dieu à une tête mais avec deux visages opposés. Par analogie, le terme « Janus » qualifie tout objet dissymétrique, tel qu'une particule sphérique dont les deux hémisphères seraient physiquement et/ou chimiquement différent.

Dans la présente invention, on entend par particules Janus, des particules dissymétriques de taille submicronique ou micronique présentant deux parties chimiquement et/ou de polarité différentes[1,2]. De par ces propriétés, ces particules constituent une catégorie unique de matériaux, qui présentent un intérêt croissant à la fois pour l'industrie et la communauté scientifique. En effet, de telles particules peuvent être utilisées dans un grand nombre d'application, allant des domaines de la catalyse[3] aux traitements thérapeutiques[4]. Jusqu'à présent, la plupart des méthodes ou procédés utilisés pour générer de tels objets ont nécessité de briser la symétrie par introduction d'une interface[2,5,6,7]. Cela présente toutefois l'inconvénient de rendre assez difficile la préparation de larges quantités de particules, dans la mesure où la plupart des techniques conduisent de manière usuelle à des équivalents d'une monocouche de matériaux, puisque les modifications des particules ont lieu dans un espace réactionnel bidimensionnel

Par conséquent, il existe donc un besoin croissant dans le développement de procédés ou méthodes alternatifs remplaçant les approches bidimensionnelles par de véritables techniques tridimensionnelles, qui permettent une extrapolation (au sens d'un changement d'échelle) de la production de particules Janus à petite échelle (typiquement à l'échelle du laboratoire) vers une production à grande échelle de type industriel.

A l'heure actuelle, il existe seulement trois procédés tridimensionnels vraiment spécifiques mais ne permettant pas un réglage fin de la force motrice de la modification[8,9,10]. Par exemple, une approche possible est basée sur la génération de porteurs de charge sur des semi-conducteurs utilisant la lumière[8] ou les effets d'antenne[9]. Un autre procédé intéressant est celui décrit par Banin et al[10] qui consiste à utiliser le composé $HAuCl_4$ pour faire croître un matériau sur des tubes en or ou des nanotubes en séléniure de cadmium

Dans ce contexte, l'électrochimie bipolaire représente une autre possibilité attractive de modifier sélectivement des particules dans un milieu réactionnel tridimensionnel. Ce concept, qui a été pour la première fois décrit par *Fleischmann et al.*[11] en 1986, est basé sur le fait que lorsque l'on place un objet conducteur dans un champ électrique d'intensité élevée entre deux électrodes, une polarisation apparait, qui est proportionnelle au champ électrique et aux dimensions caractéristiques de l'objet. Si la polarisation est assez forte, des réactions d'oxydoréduction peuvent se produire aux extrémités opposées de l'objet.

On trouve des applications récentes de ce concept en tant que force motrice dans les réactions d'électrochimiluminescence[12], en tant que mode de détection en électrophorèse capillaire[13], pour la préparation de surfaces structurées[14], pour la fonctionnalisation des pores de membranes[15], pour la création de contacts électriques[16] et en tant que mécanisme pour déplacer des micro-objets[17].

La valeur V de potentiel créée entre les deux extrémités d'un substrat conducteur placé dans un champ électrique est donnée par l'équation (1) ci-dessous :

$$V = E\ d \qquad\qquad (1)$$

avec E définissant le champ électrique global and d définissant la taille de la particule.

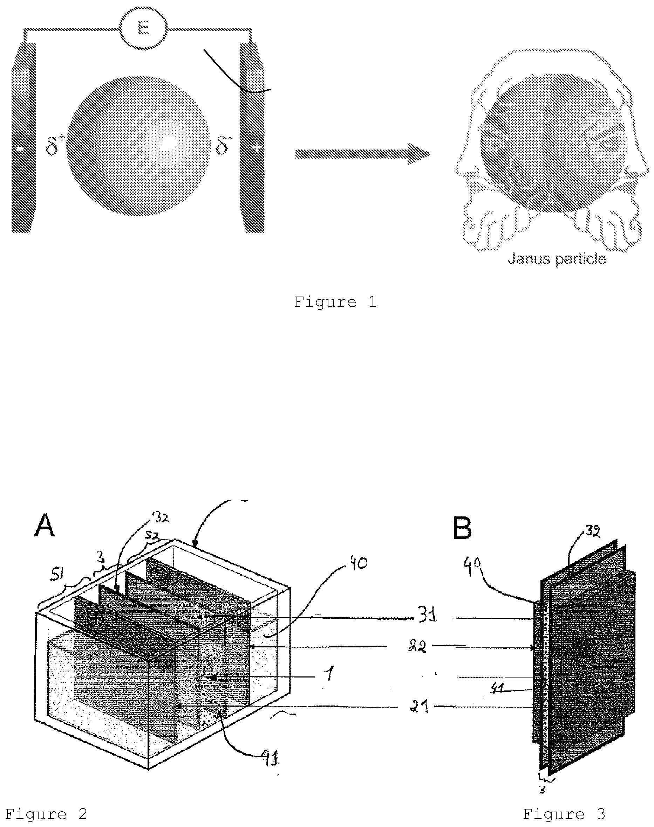

Il en découle que lorsqu'on utilise un champ électrique d'intensité approprié, la force motrice que constitue la différence de potentiel V peut être utilisée pour effectuer des réactions d'oxydoréduction aux deux extrémités du substrat, conduisant ainsi à une dissymétrisation des particules comme cela est illustré sur la figure 1 jointe à la présente demande. Sur cette figure, + désigne le site d'oxydation et - le site de réduction.

Afin de pouvoir réaliser deux réactions d'oxydoréduction au niveau des faces opposées d'un objet, la différence de potentiel V doit être en première approximation au moins égale à la différence entre les potentiels formels des deux couples d'oxydoréduction engagés. Par exemple, si l'on souhaite réaliser une fonctionnalisation dissymétrique avec de l'or aux extrémités chargées négativement en utilisant du tétrachloroaurate, on doit réaliser la réaction suivante :

$$[Au^{III}Cl_4]^- + 3\ e^- \rightarrow Au^0{}_{(s)} + 4\ Cl^- \qquad E^0 = 0.99\ V\ vs\ NHE \quad (2)$$

avec NHE étant l'électrode normale hydrogène qui sert de référence.

Afin de pouvoir équilibrer la consommation de charges, une réaction d'oxydation doit avoir lieu à l'extrémité opposée et il est fait l'hypothèse qu'il s'agit de l'oxydation de l'eau :

$$2\ \mathrm{H_2O_{(l)}} \rightarrow 4\ \mathrm{H^+_{(l)}} + \mathrm{O_{2(g)}} + 4\ \mathrm{e^-}\ E^0 = 1.23\ \mathrm{V\ vs\ NHE}\ (3)$$

Il s'ensuit immédiatement que, dans ce cas, une différence de potentiel minimale d'approximativement :

$$\Delta V_{\min} = \frac{E^0_{\frac{Au}{AuCl_4^-}}} {} - \frac{E^0_{\frac{H_2O}{O_2}}} {} = 0.24\ \mathrm{V}\ (4)$$

est nécessaire pour déclencher la réaction.

Cela devient un problème intrinsèque de cette approche lorsque les objets à fonctionnaliser sont de taille micro- ou nanométrique, puisque E doit alors atteindre des valeurs de l'ordre de MV m$^{-1}$. Cela n'est pas compatible avec un environnement industriel traditionnel, et en particulier lorsqu'on utilise des solutions aqueuses, en raison des réactions parasites intrinsèques, qui sont accompagnées par la formation de bulles de gaz macroscopiques au niveau de chaque électrode, de sorte que cela perturbe l'orientation des objets dans le champ électrique.

Ce problème a été résolu en partie par Bradley et al. En utilisant des solvants organiques, de manière à agrandir la fenêtre de potentiel de l'électrolyte et en rendant ainsi possible la génération de dépôts métalliques de façon dissymétrique sur différents objets de taille micronique ou submicronique[18,19]. La technique utilisée par Bradley et al. présente toutefois l'inconvénient de nécessiter d'immobiliser les objets sur une surface, de manière à les empêcher de tourner, ce qui signifie que la technique développée par Bradley et al. est en fait encore un procédé bidimensionnel et non un véritable procédé tridimensionnel se déroulant dans tout le volume du réacteur.

La société demanderesse a récemment démontré qu'il était possible de pallier ces inconvénients par un procédé d'électrophorèse capillaire mis en œuvre de manière à pouvoir appliquer un champ électrique élevé[20,21]. Néanmoins, étant donné que la modification des particules est réalisée dans un capillaire dont le diamètre interne ne peut excéder quelques centaines de microns, la production des particules Janus est très lente et rend ce procédé peu rentable pour une application industrielle.

Le but de la présente invention vise donc à pallier tout ou partie des inconvénients de l'art antérieur, par la mise en œuvre d'un procédé véritablement tridimensionnel et présentant une grande souplesse d'utilisation, qui rend possible la formation d'une large gamme de particules Janus en termes de matériau, taille, forme et nature de la modification. Ainsi, le procédé mis au point par les demandeurs permet la formation de particules Janus de taille micronique ou submicronique présentant une forme isotrope ou anisotrope et dont la partie modifiée a une forme spécifique délimitée par un contour précis.

En particulier, la présente divulgation a pour objet des particules Janus de taille submicronique ou micronique comportant un substrat électriquement conducteur présentant au moins une partie chimiquement et/ou physiquement modifiée par dépôt d'une couche de matériau électro-chimiquement déposable, et une partie non modifiée.

Selon la divulgation, ces particules Janus sont de forme isotrope, et la couche de matériau électro-chimiquement déposable a une forme spécifique délimitée par un contour précis.

Par forme spécifique délimitée par un contour précis, on entend, au sens de la présente invention une forme prédéfinie avec des contours précis, qui n'est pas due au hasard mais à un choix motivé par l'application visée.

A titre de forme délimitée par un contour précis, on peut notamment citer une ligne circulaire, un point, ou un hémisphère ou portion d'hémisphère, comme cela est illustré dans les exemples 5A à 5C.

Les particules Janus peuvent présenter une ou plusieurs parties chimiquement et/ou physiquement modifiées.

Ainsi, selon un mode de réalisation avantageux de la présente divulgation, les particules Janus présentent deux parties chimiquement et/ou physiquement modifiées, qui peuvent être identiques ou différentes.

Par exemple, une configuration particulièrement intéressante des particules selon la divulgation peut par exemple être la suivante : l'une des parties est recouverte d'une couche d'un premier matériau électro-chimiquement déposable, et l'autre partie est recouverte d'une couche d'un deuxième matériau électro-chimiquement déposable différent dudit premier matériau. Pour une telle configuration (deux zones modifiées par recouvrement avec des matériaux différents), plusieurs alternatives sont possibles en fonction de l'application recherchée :

  ○ les premier et deuxième matériaux sont des matériaux électriquement conducteurs ;
  ○ les premier et deuxième matériaux sont des matériaux isolants ;
  ○ le premier matériau est un matériau électriquement conducteur et le deuxième matériau est un matériau isolant.

A titre de matériaux électriquement conducteurs utilisables dans le cadre de la présente divulgation, on peut notamment citer les métaux et les semi-conducteurs.

Parmi les métaux utilisables dans le cadre de la présente divulgation, on citera plus particulièrement l'or, le cuivre, le zinc, l'argent, le platine et le nickel.

Parmi les semi-conducteurs utilisables dans le cadre de la présente divulgation, on citera plus particulièrement le ZnO, le CdS, le CdSe et le $TiO_2$.

A titre de matériaux isolants utilisables dans le cadre de la présente divulgation, on peut notamment citer les matériaux polymères, les molécules organiques (notamment les peintures électro-phorétiques), les matériaux sol-gel à base de silice, des oxydes métalliques ou des sels métalliques.

Parmi les matériaux polymères utilisables dans le cadre de la présente divulgation, on citera plus particulièrement les polymères choisis parmi les familles des polypyrroles, des polyanilines et des polythiophènes.

Le substrat des particules Janus doit nécessairement être un substrat électriquement conducteur pour que la polarisation puisse avoir lieu lorsque l'on place le substrat dans le champ électrique entre deux électrodes conformément au procédé de l'invention.

Il peut s'agir d'un substrat en matériau conducteur ou semi-conducteur, par exemple une bille de carbone ou d'un métal ou d'un alliage métallique.

La présente invention a aussi pour objet un procédé électrochimique de synthèse de particules Janus à partir de substrats submicroniques ou microniques électriquement conducteurs, caractérisé en ce qu'il comporte les étapes comme établies dans la revendication 1.

Le procédé selon l'invention est applicable à des substrats particulaires de forme isotrope (en particulier des billes).

Avantageusement, les substrats (1) sont des billes ou des nanotubes de carbone ou de métal.

Pour réaliser, à l'aide du procédé selon l'invention, des particules Janus présentant deux parties modifiées, on procède comme suit :

◦ dans le cas où il s'agit de deux matériaux de nature différente, on génère un matériau par réduction d'un côté (par exemple réduction d'un cation métallique), et l'autre matériau par oxydation de l'autre côté (par exemple oxydation de pyrrole) de façon simultanée ;

◦ dans le cas où ce sont deux matériaux identiques des créneaux de potentiels (impulsions) peuvent être imposés pour permettre aux particules de se retourner pendant le procédé. On peut aussi procéder à une inversion de polarité des électrodes, qui permet de basculer les pôles anodiques et cathodiques des substrats pendant le procédé.

Selon un premier mode de réalisation particulièrement avantageux du procédé selon l'invention, les séparateurs ne sont pas perméables aux substrats et sont placés dans un même réacteur d'électrodéposition contenant la solution électrolytique et les électrodes, en étant disposés entre lesdites électrodes de manière à définir :

◦ la cellule d'électrodéposition dans laquelle les substrats et la (ou les) source(s) de matériau électriquement conducteur sont mis en solution,

◦ un compartiment cathodique, intégrant l'électrode servant de cathode et adjacent à l'une desdits séparateurs, et

◦ un compartiment anodique, intégrant l'électrode servant d'anode et adjacent à l'autre séparateur.

Dans ce mode de réalisation, les séparateurs, tout en étant non perméables aux substrats, sont quand même perméables aux ions. Par exemple, il peut s'agir de membranes imperméables à la fois aux substrats et à la source de matériau électrodéposable, ou bien il peut aussi s'agir de frittés, qui sont imperméables aux substrats, mais laissent passer la source de matériau.

Dans ce mode de réalisation, l'intensité du champ électrique sera avantageusement de l'ordre de 1kV/m à 1MV/m, et sa durée d'application avantageusement comprise entre 10 secondes et 10 minutes, soit en continu, soit de façon intermittente et/ou alternante.

Selon un deuxième mode de réalisation particulièrement avantageux du procédé selon l'invention, les séparateurs sont en un matériau étanche. Par exemple, il peut s'agir de parois fines en verre ou en une matière plastique telle que le PLEXIGLAS®. Dans ce mode de réalisation, l'intensité du champ électrique sera avantageusement de l'ordre de 1kV/m à 1000 MV/m, et sa durée d'application avantageusement comprise entre 10 secondes et plusieurs heures.

En ce qui concerne la source de matériau électro-chimiquement déposable que l'on introduit dans la cellule, celle-ci est avantageusement choisie parmi les ions métalliques, les sels métalliques (qui forment, lors de mise en œuvre du procédé selon l'invention, en premier lieu un hydroxyde précipitant sur la surface du substrat, pour être ensuite transformé en oxyde), les monomères électro-polymérisables, les sels organiques électro-cristallisables, les sels inorganiques électro-cristallisables, les molécules organiques électro-greffables, les peintures électro-phorétiques et les précurseurs de matériaux sol-gel à base de silice.

A titre de monomères électro-polymérisables, on peut notamment citer les monomères dérivés du pyrrole, aniline et thiophène.

A titre de précurseurs de matériaux sol-gel à base de silice, on peut notamment citer les précurseurs de type alcoxysilane sont choisis parmi le méthyltriméthoxysilane (MTMS), le tétraéthoxysilane (TEOS), le méthyltriéthoxysilane (MTES), le diméthyldiméthoxysilane, et leurs mélanges.

A titre d'ions métalliques, on peut notamment citer les ions métalliques de l'or, du cuivre, du zinc, de l'argent, du platine et du nickel.

De préférence, on définit la forme de la couche de matériau électro-chimiquement déposable en agissant sur la concentration et la charge du précurseur du matériau électrodéposable ainsi que sur le champ électrique appliqué, car la forme de la couche dépend de la compétition entre la direction de migration des ions et la cinétique d'électrodéposition, qui dépend sensiblement de la concentration en précurseur et du champ appliqué.

La solution électrolytique mise en œuvre dans le procédé selon l'invention peut être une solution aqueuse ou une solution de solvant non aqueux, par exemple du toluène, de l'acétonitrile, ou leurs mélanges.

Si l'on réalise des particules Janus de forme isotrope à l'aide du procédé selon l'invention, il est important que la solution électrolytique présente une viscosité suffisante qui empêche la particule de tourner. La solution électrolytique est gélifiée.

Enfin, la présente divulgation a encore pour objet un dispositif pour la mise en œuvre du procédé selon l'invention, caractérisé en ce qu'il comprend une cellule d'électrodéposition contenant la solution électrolytique, ladite cellule étant délimitée par des séparateurs en un matériau étanche à l'extérieur desquels sont disposées de manière contiguë des électrodes.

D'autres avantages et particularités de la présente invention résulteront de la description qui va suivre, donnée à titre d'exemple non limitatif et faite en référence aux figures annexées :

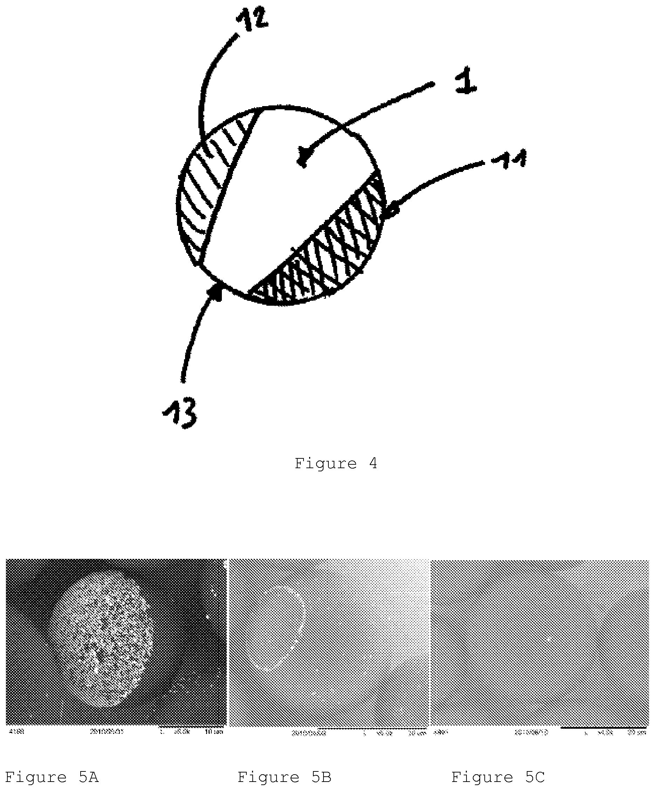

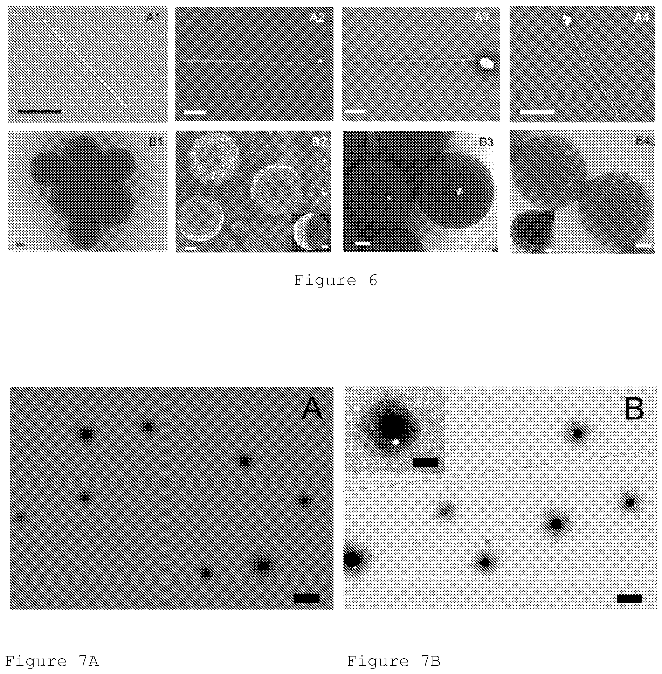

◦ la figure 1 représente un schéma de principe de l'électrodéposition bipolaire utilisée pour former des particules Janus,
◦ la figure 2 représente un schéma de principe d'un exemple de cellule d'électrodéposition pour la mise en œuvre du procédé selon l'invention selon un premier mode de réalisation ;
◦ la figure 3 représente un schéma de principe d'un dispositif d'électrodéposition pour la mise en œuvre du procédé selon l'invention selon un deuxième mode de réalisation ;
◦ la figure 4 représente schématiquement une particule Janus selon la divulgation, de forme isotrope (en l'occurrence une bille), qui présente deux zones modifiées.
◦ les figures 5A à 5C correspondent à trois images de microscopie électronique à balayage (MEB) de trois exemples de particules Janus (billes de carbone) selon l'invention de forme isotrope,
◦ la figure 6 montre :

- une première série de quatre images A1 à A4 de microscopie électronique à balayage (MEB) de substrats de taille micronique et de forme anisotrope, avant (image A1) et après l'électrodéposition bipolaire (images A2 à A4), et
- une deuxième série de quatre images B1 à B4 de microscopie électronique à balayage (MEB) de substrats de taille micronique et de forme isotrope, avant (image B1) et après l'électrodéposition bipolaire (images B2 à B4) ;

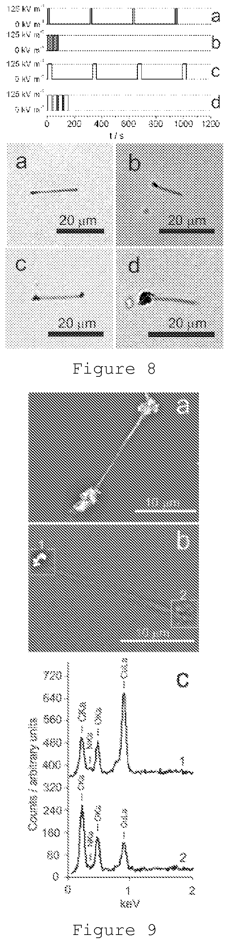

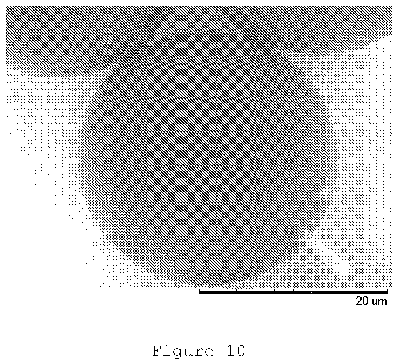

◦ la figure 7 montre deux images A et B de microscopie électronique à balayage (MEB) de substrats de taille submicronique et de forme isotrope, avant (image A) et après l'électrodéposition bipolaire (image B), la partie modifiée correspondant au petit point blanc ;
◦ la figure 8 montre quatre images (a, b, c, d) de microscopie optique à transmission de tubes de carbone bifonctionnalisés cuivre/cuivre, obtenus à l'aide du procédé selon l'invention en imposant des créneaux de potentiels ;
◦ la figure 9a montre une image de microscopie électronique à balayage (MEB) d'un tube de carbone bifonctionnalisé cuivre/ cuivre à l'aide du procédé selon la divulgation
◦ la figure 9b montre une image de microscopie électronique à balayage (MEB) d'un tube de carbone bifonctionnalisé cuivre/polypyrrole à l'aide du procédé selon la divulgation,
◦ la figure 10 montre une image de microscopie électronique à balayage (MEB) d'un dépôt localisé et monocristallin d'un sel de platine (partie blanche sur la figure 10) sur une bille de carbone par électrochimie bipolaire conformément au procédé selon l'invention.

Les éléments identiques représentés sur les figures 2 à 9 sont identifiés par des références numériques identiques.

La figure 1, qui est commentée dans la description de l'art antérieur, représente un schéma de principe d'un exemple de dispositif pour la mise en œuvre du procédé selon l'invention selon un premier mode de réalisation. Cette figure montre notamment qu'une polarisation suffisante d'une particule conductrice permet d'en briser la symétrie.

Les figures 2 et 3 représentent des schémas de principe d'un dispositif d'électrodéposition pour la mise en œuvre du procédé selon l'invention, qui correspondent chacun à un mode de réalisation différent. Ces figures montrent que le dispositif d'électrodéposition comprend une cellule d'électrodéposition 3, définie par deux séparateurs 31, 32, est disposée entre deux électrodes 21, 22.

Le principe de fonctionnement pour les deux modes de réalisation du dispositif d'électrodéposition, qui est le même, comporte les étapes suivantes:

A. on introduit des substrats 1 submicroniques ou microniques et au moins une source 41 d'un matériau électro-chimiquement déposable dans une solution électrolytique 40 contenue dans la cellule 3 ;

B. on applique une différence de potentiel E entre les deux électrodes 21, 22, de manière à créer un champ électrique E suffisamment fort et pendant une durée suffisamment élevée pour former des particules Janus.

La figure 3 représente plus particulièrement un dispositif d'électrodéposition 3, qui comprend un réacteur 5 d'électrodéposition contenant la solution électrolytique 40, les électrodes 21, 22 qui plongent dans la solution électrolytique, et les séparateurs 31, 32 qui consistent en des membranes ou des plaques non perméables aux substrats. Ces membranes 31, 32 sont disposées entre les électrodes 21, 22 de manière à définir :

- la cellule d'électrodéposition 3 proprement dite, dans laquelle sont introduits les substrats 1 d'un matériau électriquement conducteur et la source 41 pour les mettre en solution,

- un compartiment cathodique 51, qui intègre l'électrode servant de cathode 21 et est adjacent à l'une des membranes 31, et

- un compartiment anodique 52, qui intègre l'électrode servant d'anode 22 et est adjacent à l'autre membrane 32.

La figure 4 représente plus particulièrement un dispositif d'électrodéposition 3, dans lequel les séparateurs 31, 32 sont en un matériau étanche (verre ou PLEXIGLAS®). Ils délimitent la cellule d'électrodéposition 3 contenant la solution électrolytique 40 et à l'extérieur de laquelle 3 sont disposées de manière contiguë les électrodes 21,22.

Les exemples suivants illustrent l'invention sans toutefois en limiter la portée.

## EXEMPLES

## EXEMPLE 1

**Synthèse de particules Janus microniques selon l'invention monofonctionnalisées en utilisant le dispositif représenté sur la figure 2**

On a synthétisé des particules Janus monofonctionnalisées conformément au procédé de l'invention en utilisant le dispositif d'électrodéposition représenté sur la figure 2, dans lequel :

- on impose une différence de potentiel E de l'ordre de 2 kV entre les électrodes, conduisant à un champ électrique E de 100 kVm$^{-1}$ dans la cellule d'électrodéposition,
- les séparateurs sont des membranes échangeuses de protons ou des plaques en verre fritté ; et
- les électrodes 21, 22 sont immergées dans de l'éthanol à -100°C (pour compenser les effets du chauffage ohmique dans le réacteur) et à une distance l'une de l'autre de l'ordre de 2 cm.
- les substrats 1 utilisés sont soit des tubes de carbone (images 6A2, 6A2 et 6A3), soit des billes de carbone vitreux (images 6B1, 6B2 et 6B3),
- les solutions électrolytiques 40 sont des solutions aqueuses, qui contiennent en tant que source de matériau électrodéposable les sels métalliques suivants :

  ◦ $AuCl_4^-$ à 1 mM (images 6A2 et 6B2), ou
  ◦ $PtCl_6^{2-}$ à 10 mM (image 6A3), ou
  ◦ nitrate d'argent $AgNO_3$ 1 mM (image 6B3).

Dans le cas particulier de l'utilisation de substrats de billes de carbones vitreux, la solution électrolytique 40 est un hydrogel d'agar-agar.

On a observé par microscopie électronique à balayage (MEB) les substrats avant (images 6A1 et 6B1) et après la synthèse par électrodéposition (images 6A2, 6A3, 6B2, 6B3). Sur les figures A1 à A3 et B1 à B3, l'échelle visible (trait blanc) est de 5 m. Les résultats de ces observations sont rassemblés dans le tableau 1.

## EXEMPLE 2

**Synthèse de particules Janus microniques selon l'invention monofonctionnalisées, en utilisant le dispositif représenté sur la figure 3**

On a synthétisé des particules Janus monofonctionnalisées conformément au procédé de l'invention en utilisant le dispositif d'électrodéposition représenté sur la figure 3, dans lequel :

- on impose une différence de potentiel E de l'ordre de 6 kV entre les électrodes, conduisant à un champ électrique E de 20 MV m$^{-1}$ dans la cellule d'électrodéposition,
- les séparateurs sont des parois fines en verre de 100 m, et séparées l'une de l'autre également de 100 m ;
- les substrats 1 utilisés sont soit des tubes de carbone (images 6A1 et 6A4), soit des billes de carbone vitreux (images 6B1 et 6B4),
- la solution electrolytique 40 est un hydrogel d'agar-agar, qui contient en tant que source de matériau électrodéposable le chlorure d'or $AuCl_4^-$ à 10 mM (image 6A4) et le chlorure d'or $AuCl_4^-$ à 1 mM (image 6B4).

On a observé par microscopie électronique à balayage (MEB) les substrats avant (images A1 et B1) et après la synthèse par électrodéposition (images A4 et B4). Sur les figures A4 et B4, l'échelle visible (trait blanc) est également de 5 m. Les résultats de ces observations sont rassemblées dans le tableau 1.

Tableau 1

| Figures | Substrat | Mode de réalisation | Forme du dépôt |
|---------|----------|---------------------|----------------|
| 6A1 | Tubes de C | - | - |
| 6A3 | Tubes de C | A (figure 2) | point |
| 6A3 | Tubes de C | A (figure 2) | cluster |
| 6A4 | Tubes de C | B (figure 3) | cluster |
| 6B1 | Billes de C vitreux | - | - |
| 6B2 | Billes de C vitreux | A (figure 2) | hémisphère dépôt dense |
| 6B3 | Billes de C vitreux | A (figure 2) | point |
| 6B4 | Billes de C vitreux | B (figure 3) | hémisphère dépôt non dense |

## EXEMPLE 3

**Synthèse de particules Janus submicroniques selon l'invention monofonctionnalisées, en utilisant le dispositif représenté sur la figure 2**

On a synthétisé des particules Janus monofonctionnalisées conformément au procédé de l'invention en utilisant le dispositif d'électrodéposition représenté sur la figure 2, dans lequel :

- on impose une différence de potentiel E de l'ordre de 2 kV entre les électrodes, conduisant à un champ électrique de 100 kV m$^{-1}$ dans la cellule d'électrodéposition ;
- les séparateurs sont des membranes échangeuses de protons ou des plaques en verre fritté ;
- les électrodes 21, 22 sont immergées dans de l'éthanol à -100°C (pour compenser les effets du chauffage ohmique dans le réacteur) et à une distance l'une de l'autre de l'ordre de 2 cm ;
- les substrats 1 utilisés sont des billes de carbone vitreux ; et
- la solution electrolytique 40 est un hydrogel d'agar-agar, qui contient en tant que source de matériau électrodéposable le chlorure d'or $AuCl_4^-$ à 1 mM.

On a observé par microscopie électronique à balayage (MEB) les substrats avant (images 7A) et après la synthèse par électrodéposition (images 7B). Sur les figures 7A et 7B, l'échelle visible (trait noir) est de 1 m.

## EXEMPLE 4

**Synthèse de particules Janus microniques pas selon l'invention bifonctionnalisées cuivre/polypyrrole à l'aide du dispositif représenté sur la figure 2**

On a synthétisé des particules Janus bifonctionnalisées cuivre/polypyrrole conformément au procédé de l'invention en utilisant le dispositif d'électrodéposition représenté sur la figure 2, dans lequel :

- on prépare une première solution électrolytique 40 consistant en une suspension de Cu$^I$ dans de l'acétonitrile à raison de 10 mM de Cu$^I$, dans laquelle on introduit des tubes de carbone à raison de 0,1 mg dans la suspension ;
- on prépare une deuxième solution électrolytique 40 comprenant 10 mM de Cu$^I$ et 50 mM de pyrrole,
- on procède à une sonication de ces deux solutions pendant une minute,
- on introduit ces deux suspensions 40 dans la cellule 3 d'électrodéposition ;
- on impose une différence de potentiel de l'ordre de 2 kV entre les électrodes ;
- les séparateurs sont des membranes échangeuses de protons ; et
- on génère la formation d'un dépôt de cuivre sur l'une des extrémités des tubes par réduction du cation Cu$^+$, et la formation d'un dépôt de pyrrole sur l'autre coté par oxydation du pyrrole.

Les tubes de carbone dissymétriques cuivre/polypyrrole ainsi obtenus ont été observés par microscopie électronique à balayage (MEB) : sur la figure 9b, l'échelle visible (trait blanc) est de 10 m. Les dépôts ont été caractérisés par analyse dispersive en énergie(EDX) (Figure 9c).

## EXEMPLE 5

**Synthèse de particules Janus microniques pas selon l'invention bifonctionnalisées cuivre/cuivre à l'aide du dispositif représenté sur la figure 2**

On a synthétisé des particules Janus bifonctionnalisées conformément au procédé de l'invention en utilisant le dispositif d'électrodéposition représenté sur la figure 2, dans lequel :

- on prépare une solution électrolytique 40 consistant en une suspension de Cu$^I$ dans de l'acétonitrile à raison de 10 mM de Cu$^I$, dans laquelle on introduit des tubes de carbone à raison de 0,1 mg dans la suspension ;
- on procède à une sonication de cette solution pendant une minute ;
- on l'introduit dans la cellule 3 d'électrodéposition ;
- on impose une différence de potentiel en régime pulsé avec un champ électrique de 125 MV m$^{-1}$ dans la cellule d'électrodéposition : en fonction des impulsions testées variant entre 12 s et 30 s, on observe des variations au niveau des dépôts, avec un intervalle de temps entre les impulsions (temps de relaxation) de 1 s ou de 5 minutes ;
- les séparateurs sont des membranes échangeuses de protons ; et
- on génère la formation d'un dépôt de cuivre sur chacune des extrémités des tubes.

Les tubes de carbone modifiés bifonctionnalisés cuivre/cuivre ainsi obtenus ont été observés par microscopie optique à transmission : sur les figures 8a à 8d, l'échelle visible (traits noirs) est de 20 m. Les figures 8a (avec un intervalle d'impulsion de 5 minutes) et 8b (avec un intervalle d'impulsion de 10 s) correspondent à une impulsion de 12s, tandis que les figures 8c (avec un intervalle d'impulsion de 5 minutes) et 8d (avec un intervalle d'impulsion de 10 s) correspondent à une impulsion de 30s. Les particules obtenues ont aussi été observées au microscope électronique à balayage (MEB) (figure 9a).

Lorsque le temps de relaxation (temps entre les pulses de potentiels ou le potentiel est arrêté) est suffisamment long, on obtient des tubes modifiés symétriquement (figures 8a et 8c), alors que lorsque ce temps est court, les particules ne sont modifiés qu'à une extrémité (figures 8b et 8d). Le temps d'imposition du champ électrique permet aussi de contrôler la taille du dépôt.

## EXEMPLE 6

**Synthèse de particules Janus microniques selon l'invention monofonctionnalisées, en utilisant le dispositif représenté sur la figure 2**

On a synthétisé des particules Janus monofonctionnalisées conformément au procédé de l'invention en utilisant le dispositif d'électrodéposition représenté sur la figure 2, dans lequel :

■ on impose une différence de potentiel E de l'ordre de 1 kV entre les électrodes, conduisant à un champ électrique de 25 kV m$^{-1}$ dans la cellule d'électrodéposition ;
• les séparateurs sont des plaques en verre fritté ;
• les électrodes 21, 22 sont immergées dans de l'éthanol à -100°C (pour compenser les effets du chauffage ohmique dans le réacteur) et à une distance l'une de l'autre de l'ordre de 4 cm ;
• les substrats 1 utilisés sont des billes de carbone vitreux ; et
■ la solution électrolytique 40 est un hydrogel d'éthylcellulose dans de l'éthanol, qui contient en tant que source de matériau électrodéposable le chlorure de platine sous forme d'acide $H_2PtCl_6{}^{2-}$ à 5 mM.

On a observé par microscopie électronique à balayage (MEB)la nanoparticule ainsi obtenue après la synthèse par électrodéposition (Figure 10).

**Liste des références**

[1] De Gennes, P. G. Soft Matter. Rev. Mod. Phys. 64, 645-648 (1992).

[2] Walther, A., Muller, A.H.E.Janus particules. Soft Matter 4, 663-668 (2008).

[3] Cole-Hamilton, D. J. Janus catalysts direct nanoparticle reactivity. Science 327, 41-42 (2010).

[4] Hu, S.- H., Gao, X. Nanocomposites with spatially separated functionalities for combined imaging and magnetolytic therapy. J. Am. Chem. Soc. 132, 7234-7237 (2010).

[5] Perro, A., Reculusa, S., Ravaine, S., Bourgeat-Lami, E., Duguet, E. Design and synthesis of Janus micro- and nanoparticles J. Mater. Chem. 15, 3745-3760 (2005).

[6] Roh, K.-H., Martin, D. C., Lahann, J. Biphasic Janus particles with nanoscale anisotropy. Nat. Mater. 4, 759-763 (2005).

[7] Paunov, V. N., Cayre, O. J. Supraparticles and «Janus» particles fabricated by replication of particles monolayers at liquid interfaces using a gel trapping technique. Adv. Mater. 16, 788-791 (2004).

[8] Reiche, H., Dunn, W.W., Bard, A.J. Heterogeneous photocatalytic and photosynthetic déposition of copper on TiO2 and WO3 powders. J. Phys. Chem. 83, 2248-2251 (1979).

[9] Duque, J. G., Eukel, J. A., Pasquali, M., Schmidt H. K. Self-assembled nanoparticle-nanotube structures (nanoPaNTs) based on antenna chemistry of single-walled carbon nanotubes. J. Phys. Chem. C, 113, 18863-18869 (2009).

[10] Mokari, T., Sztrum, C.G., Salant, A., Rabani, E., Banin, U. Formation of asymmetric one-sided metal-tipped semiconductor nanocrystal dots and rods. Nat. Mater. 4, 855-563 (2005).

[11] Fleischmann, M., Ghoroghchian, J., Rolison, D., Pons, S. Electrochemical behavior of dispersions of spherical ultramicroelectrodes. J. Phys. Chem. 90, 6392-6400 (1986).

[12] Chow, K.-F., Mavré, F., Crooks, J.A., Chang, B-Y., Crooks, R. M. A large-scale, wireless electrochemical bipolar electrode microarray J. Am. Chem. Soc., 131, 8364-8365 (2009).

[13] Ordeig, O., Godino, N., Del Campo, J., Munos, F.X., Nikolajeff, F., Nyholm, L., On-chip electric field driven electrochemical détection using a poly(dimethylsiloxane) microchannel with gold microband electrodes. Anal. Chem. 80, 3622-3632 (2008).

[14] Ulrich, C., Andersson, O., Nyholm, L., Björefors, F. Potential and current density distributions at electrodes intended for bipolar patterning. Anal. Chem. 81 453-459 (2008).

[15] Bouquet, A., Deschamp, E., Maillet, P., Livache, T., Chatelain, F., Haguet, V. Contactless electrofunctionalization of a single pore. Small 5, 2297-2303 (2009).

[16] Bradley, J.-C.; Crawford, J.; Ernazarova, K.; McGee, M.; Stephens S. G. Wire formation on circuit boards using spatially coupled bipolar electrochemistry. Adv. Mater. 15, 1168-1171 (1997).

[17] Loget, G., Kuhn, A. Propulsion of microobjects by dynamic bipolar self-regeneration. J. Am. Chem. Soc., (2010).

[18] Bradley, J.-C., Chen, H.-M., Crawford, J., Eckert, J., Ernazarova, K., Kurzeja, T., Lin, M., Nadler, W., Stephens, S.G. Creating electrical contacts between metal particles using directed electrochemical growth, Nature, 389, 268-217. (1997).

[19] Bradley, J.-C., Zhongming, M. Contactless electrodeposition of palladium catalysts Angew. Chem. Int. Ed., 38, 1663-1666 (1999).

[20] Warakulwit, C., Nguyen, T., Majimel, J., Delville, M.-H., Lapeyre, V., Garrigue, P., Ravaine, V., Limtrakul, J., Kuhn, A. Dissymmetric carbon nanotubes by bipolar electrochemistry. Nano Lett. 8, 500-504 (2008).

[21] Loget G., Larcade, G., Lapeyre, V., Garrigue, P., Warakulwit, C., Limtrakul, J., Delville, M.-H., Ravaine, V., Kuhn, A., Single point electrodeposition of nickel for the dissymmetric décoration of carbon tubes. Electrochim. Acta 55, 8116-8120 (2010).

## Revendications

**1.** Procédé électrochimique de synthèse de particules Janus à partir de substrats (1) submicroniques ou microniques électriquement conducteurs de forme isotrope, **caractérisé en ce qu'**il comporte les étapes suivantes:

• on forme un milieu réactionnel tridimensionnel par introduction desdits substrats (1) submicroniques ou microniques électriquement conducteurs de forme isotrope et d'au moins une source (41) d'un matériau électrochimiquement déposable dans une solution électrolytique (40) gélifiée contenue dans une cellule d'électrodéposition (3) définie par deux séparateurs (31, 32), ladite cellule d'électrodéposition (3) étant disposée entre deux électrodes (21, 22), ladite solution électrolytique (40) gélifiée présentant une viscosité suffisante pour empêcher les substrats (1) submicroniques ou microniques électriquement conducteurs de forme isotrope de tourner;
• on applique une différence de potentiel E entre les deux électrodes (21, 22) de manière à créer un champ électrique E suffisamment fort et pendant une durée suffisamment élevée pour former, dans tout le volume du milieu réactionnel tridimensionnel, des particules Janus avec une couche de matériau électro-chimiquement déposable, cette couche ayant une forme spécifique délimitée par un contour précis choisi parmi les contours précis suivants : (a) ligne circulaire de diamètre variable ; (b) point ; (c) hémisphère ; (d) portion d'hémisphère.

**2.** Procédé selon la revendication 1, **caractérisé en ce que** les séparateurs (31, 32) sont imperméables aux substrats (1) submicroniques ou microniques électriquement conducteurs de forme isotrope,
**en ce que** les séparateurs (31, 32) sont placés dans un réacteur (5) d'électrodéposition disposé dans le milieu réactionnel tridimensionnel, ce réacteur (5) d'électrodéposition contenant la solution électrolytique (40) gélifiée et les électrodes (21,22),
**en ce que** les séparateurs (31, 32) sont disposés entre lesdites électrodes (21, 22) de manière à définir :

• la cellule d'électrodéposition (3) dans laquelle les substrats (1) et la ou les source(s) (41) de matériau électriquement conducteur sont mis en solution,
• un compartiment cathodique (51), intégrant l'électrode servant de cathode (21) et adjacent à l'un desdits séparateurs (31), et
• un compartiment anodique (52), intégrant l'électrode servant d'anode (22) et adjacent à l'autre séparateur (32),

et **en ce que** les séparateurs (31, 32) sont en un matériau étanche.

**3.** Procédé selon la revendication 1 ou 2, **caractérisé en ce que** la source (41) de matériau électro-chimiquement déposable est choisie dans le groupe constitué de : (a) ions métalliques, (b) semi-conducteurs formés à partir de sels métalliques, (c) monomères électro-polymérisables, (d) sels organiques électro-cristallisables, (e) sels inorganiques électro-cristallisables, (f) molécules organiques électro-greffables, (g) peintures électro-phorétiques, (h) précurseurs de matériaux sol-gel à base de silice, (i) monomères dérivés du pyrrole, de l'aniline et du thiophène, (j) précurseurs de type alcoxysilane choisi dans le groupe constitué du méthyltriméthoxysilane (MTMS), du tétraéthoxysilane (TEOS), du méthyltriéthoxysilane (MTES), du diméthyldiméthoxysilane, et de leurs mélanges, (k) ions métalliques de l'or, du cuivre, du zinc, de l'argent, du platine et du nickel.

## Patentansprüche

**1.** Elektrochemisches Verfahren zur Synthese von Janus-Teilchen auf Grundlage von elektrisch leitenden submikrometrischen oder mikrometrischen Substraten (1) in Isotopform, **dadurch gekennzeichnet, dass** es die folgenden Schritte umfasst:

- Bilden eines dreidimensionalen Reaktionsmilieus durch Einbringen der elektrisch leitenden submikrometrischen oder mikrometrischen Substrate (1) in Isotopform und von mindestens einer Quelle (41) eines elektrochemisch abscheidbaren Materials in eine gelierte Elektrolytlösung (40), die in einer von zwei Separatoren (31, 32) definierten Elektroabscheidungszelle (3) enthalten ist, wobei die Elektroabscheidungszelle (3) zwischen zwei Elektroden (21, 22) angeordnet ist, wobei die gelierte Elektrolytlösung (40) eine Viskosität aufweist, die ausreicht, um zu verhindern, dass sich die elektrisch leitenden submikrometrischen oder mikrometrischen Substrate (1) in Isotopform drehen;
- Anlegen einer Potentialdifferenz E zwischen den zwei Elektroden (21, 22) so, dass ein ausreichend starkes elektrisches Feld E erzeugt wird, und während einer ausreichend hohen Dauer, um im gesamten Volumen des dreidimensionalen Reaktionsmilieus Janus-Teilchen mit einer elektrochemisch abscheidbaren Materialschicht zu bilden, wobei diese Schicht eine spezifische Form aufweist, die von einer präzisen Kontur begrenzt wird, ausgewählt aus den folgenden präzisen Konturen: (a) Kreislinie von variablem Durchmesser; (b) Punkt; (c) Halbkugel; (d) Halbkugelabschnitt.

**2.** Verfahren nach Anspruch 1, **dadurch gekennzeichnet, dass** die Separatoren (31, 32) für die elektrisch leitenden submikrometrischen oder mikrometrischen Substrate (1) in Isotopform undurchlässig sind,

dadurch, dass die Separatoren (31, 32) in einem Elektroabscheidungsreaktor (5) platziert sind, der im dreidimensionalen Reaktionsmilieu angeordnet ist, wobei dieser Elektroabscheidungsreaktor (5) die gelierte Elektrolytlösung (40) und die Elektroden (21, 22) enthält,

dadurch, dass die Separatoren (31, 32) so zwischen den Elektroden (21, 22) angeordnet sind, dass sie definieren:

- die Elektroabscheidungszelle (3), in der die Substrate (1) und die Quelle(n) (41) von elektrisch leitendem Material in Lösung gebracht werden,
- eine Kathodenkammer (51), die die als Kathode (21) dienende Elektrode beinhaltet und an einen der Separatoren (31) angrenzt, und
- eine Anodenkammer (52), die die als Anode (22) dienende Elektrode beinhaltet und an den anderen Separator (32) angrenzt,

und dadurch, dass die Separatoren (31, 32) aus einem dichten Material sind.

**3.** Verfahren nach Anspruch 1 oder 2, **dadurch gekennzeichnet, dass** die Quelle (41) von elektrochemisch abscheidbarem Material ausgewählt ist aus der Gruppe bestehend aus: (a) Metallionen, (b) auf Grundlage von Metallsalzen gebildeten Halbleitern, (c) elektropolymerisierbaren Monomeren, (d) elektrokristallisierbaren organischen Salzen, (e) elektrokristallisierbaren anorganischen Salzen, (f) elektropfropfbaren organischen Molekülen, (g) elektrophoretischen Lacken, (h) Sol-Gel-Material-Vorläufern auf Silizium-Basis, (i) Pyrrol-, Anilin- und Thiophen-Derivat-Monomeren, (j) Vorläufern vom Typ Alkoxysilan, ausgewählt aus der Gruppe bestehend aus Methyltrimethoxysilan (MTMS), Tetraethoxysilan (TEOS), Methyltriethoxysilan (MTES), Dimethyldimethoxysilan, und deren Mischungen, (k) Gold-, Kupfer-, Zink-, Silber-, Platin- und Nickel-Metallionen.

## Claims

**1.** Electrochemical method for synthesising Janus particles from isotropic electrically conductive submicronic or micronic substrates (1), **characterised in that** it includes the following steps:

- a three-dimensional reaction medium is formed by introducing said isotropic electrically conductive submicronic or micronic substrates (1) and at least one source (41) of an electrochemically depositable material into a gelled electrolytic solution (40) contained in an electrodeposition cell (3) defined by two separators (31, 32), said electrodeposition cell (3) being disposed between two electrodes (21, 22), said gelled electrolytic solution (40) having a sufficient viscosity to prevent the isotropic electrically conductive submicronic or micronic substrates (1) from rotating;
- a potential difference E is applied between the two electrodes (21, 22) so as to create a sufficiently strong electric field E for a sufficiently long duration to form, in the entire volume of the three-dimensional reaction medium, Janus particles with a layer of electrochemically depositable material, this layer having a specific shape delimited by a precise contour chosen from the following precise contours: (a) circular line of variable diameter; (b) dot; (c) hemisphere; (d) hemisphere portion.

**2.** Method according to claim 1, **characterised in that** the separators (31, 32) are impervious to the isotropic electrically conductive submicronic or micronic substrates (1),

**in that** the separators (31, 32) are placed in an electrodeposition reactor (5) disposed in the three-dimensional reaction medium, this electrodeposition reactor (5) containing the gelled electrolytic solution (40) and the electrodes (21, 22),

**in that** the separators (31, 32) are disposed between said electrodes (21, 22) so as to define:

- the electrodeposition cell (3) wherein the substrates (1) and the source(s) (41) of electrically conductive material are placed in solution,
- a cathodic compartment (51), incorporating the electrode serving as a cathode (21) and adjacent to one of said separators (31), and

an anodic compartment (52), incorporating the electrode serving as an anode (22) and adjacent to the other separator (32),

and **in that** the separators (31, 32) are made of a hermetic material.

3. Method according to claim 1 or 2, **characterised in that** the source (41) of electrochemically depositable material is chosen in the group consisting of: (a) metal ions, (b) semiconductors formed from metal salts, (c) electropolymerisable monomers, (d) electrocrystallisable organic salts, (e) electrocrystallisable inorganic salts, (f) electrograftable organic molecules, (g) electrophoretic paints, (h) silica-based sol-gel material precursors, (i) monomers derived from pyrrole, aniline and thiophene, (j) alkoxysilane type precursors chosen in the group consisting of methyltrimethoxysilane (MTMS), tetraethoxysilane (TEOS), methyltriethoxysilane (MTES), dimethyldimethoxysilane, and mixtures thereof, (k) metal ions of gold, copper, zinc, silver, platinum and nickel.

Figure 1

Figure 2

Figure 3

Figure 4

Figure 5A        Figure 5B        Figure 5C

Figure 6

Figure 7A

Figure 7B

Figure 8

Figure 9

Figure 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE GENNES, P. G.** *Soft Matter. Rev. Mod. Phys.,* 1992, vol. 64, 645-648
- **WALTHER, A. ; MULLER, A.H.E.** Janus particules. *Soft Matter,* 2008, vol. 4, 663-668
- **COLE-HAMILTON, D. J.** Janus catalysts direct nanoparticle reactivity. *Science,* 2010, vol. 327, 41-42
- **HU, S.- H. ; GAO, X.** Nanocomposites with spatially separated functionalities for combined imaging and magnetolytic therapy. *J. Am. Chem. Soc.,* 2010, vol. 132, 7234-7237
- **PERRO, A. ; RECULUSA, S. ; RAVAINE, S. ; BOURGEAT-LAMI, E. ; DUGUET, E.** Design and synthesis of Janus micro- and nanoparticles. *J. Mater. Chem.,* 2005, vol. 15, 3745-3760
- **ROH, K.-H. ; MARTIN, D. C. ; LAHANN, J.** Biphasic Janus particles with nanoscale anisotropy. *Nat. Mater.,* 2005, vol. 4, 759-763
- **PAUNOV, V. N. ; CAYRE, O. J.** Supraparticles and «Janus» particles fabricated by replication of particles monolayers at liquid interfaces using a gel trapping technique. *Adv. Mater.,* 2004, vol. 16, 788-791
- **REICHE, H. ; DUNN, W.W. ; BARD, A.J.** Heterogeneous photocatalytic and photosynthetic déposition of copper on TiO2 and WO3 powders. *J. Phys. Chem.,* 1979, vol. 83, 2248-2251
- **DUQUE, J. G. ; EUKEL, J. A. ; PASQUALI, M. ; SCHMIDT H. K.** Self-assembled nanoparticle-nanotube structures (nanoPaNTs) based on antenna chemistry of single-walled carbon nanotubes. *J. Phys. Chem. C,* 2009, vol. 113, 18863-18869
- **MOKARI, T. ; SZTRUM, C.G. ; SALANT, A. ; RABANI, E. ; BANIN, U.** Formation of asymmetric one-sided metal-tipped semiconductor nanocrystal dots and rods. *Nat. Mater.,* 2005, vol. 4, 855-563
- **FLEISCHMANN, M. ; GHOROGHCHIAN, J. ; ROLISON, D. ; PONS, S.** Electrochemical behavior of dispersions of spherical ultramicroelectrodes. *J. Phys. Chem.,* 1986, vol. 90, 6392-6400
- **CHOW, K.-F. ; MAVRÉ, F. ; CROOKS, J.A. ; CHANG, B-Y. ; CROOKS, R. M. A.** large-scale, wireless electrochemical bipolar electrode microarray. *J. Am. Chem. Soc.,* 2009, vol. 131, 8364-8365

- **ORDEIG, O. ; GODINO, N. ; DEL CAMPO, J. ; MUÑOS, F.X. ; NIKOLAJEFF, F. ; NYHOLM, L.** On-chip electric field driven electrochemical détection using a poly(dimethylsiloxane) microchannel with gold microband electrodes. *Anal. Chem.,* 2008, vol. 80, 3622-3632
- **ULRICH, C. ; ANDERSSON, O. ; NYHOLM, L. ; BJÖREFORS, F.** Potential and current density distributions at electrodes intended for bipolar patterning. *Anal. Chem.,* 2008, vol. 81, 453-459
- **BOUQUET, A. ; DESCHAMP, E. ; MAILLET, P. ; LIVACHE, T. ; CHATELAIN, F. ; HAGUET, V.** Contactless electrofunctionalization of a single pore. *Small,* 2009, vol. 5, 2297-2303
- **BRADLEY, J.-C. ; CRAWFORD, J. ; ERNAZAROVA, K. ; MCGEE, M. ; STEPHENS S. G.** Wire formation on circuit boards using spatially coupled bipolar electrochemistry. *Adv. Mater.,* 1997, vol. 15, 1168-1171
- **LOGET, G. ; KUHN, A.** Propulsion of microobjects by dynamic bipolar self-regeneration. *J. Am. Chem. Soc.,* 2010
- **BRADLEY, J.-C. ; CHEN, H.-M. ; CRAWFORD, J. ; ECKERT, J. ; ERNAZAROVA, K. ; KURZEJA, T. ; LIN, M. ; NADLER, W. ; STEPHENS, S.G.** Creating electrical contacts between metal particles using directed electrochemical growth. *Nature,* 1997, vol. 389, 268-217
- **BRADLEY, J.-C. ; ZHONGMING, M.** Contactless electrodeposition of palladium catalysts. *Angew. Chem. Int. Ed.,* 1999, vol. 38, 1663-1666
- **WARAKULWIT, C. ; NGUYEN, T. ; MAJIMEL, J. ; DELVILLE, M.-H. ; LAPEYRE, V. ; GARRIGUE, P. ; RAVAINE, V. ; LIMTRAKUL, J. ; KUHN, A.** Dissymmetric carbon nanotubes by bipolar electrochemistry. *Nano Lett.,* 2008, vol. 8, 500-504
- **LOGET G. ; LARCADE, G. ; LAPEYRE, V. ; GARRIGUE, P. ; WARAKULWIT, C. ; LIMTRAKUL, J. ; DELVILLE, M.-H. ; RAVAINE, V. ; KUHN, A.** Single point electrodeposition of nickel for the dissymmetric décoration of carbon tubes. *Electrochim. Acta,* 2010, vol. 55, 8116-8120